# EUROPEAN PATENT APPLICATION

(11) **EP 4 571 896 A1**
(43) Date of publication of application: **18.06.2025**
(21) Application number: 23862854.9
(22) Date of filing: 07.08.2023
(51) Int. Cl.: H01M 4/66, H01M 4/70, H01M 10/04, H01M 10/0585, H01M 50/121, H01M 50/186

(54) **POWER STORAGE DEVICE**

(30) Priority: 07.09.2022 JP 2022142143
(71) Applicant: KABUSHIKI KAISHA TOYOTA JIDOSHOKKI, Kariya-shi, Aichi 448-8671 (JP)
(72) Inventor: SAKAMOTO, Shunya, Kariya-shi, Aichi 448-8671 (JP); NAKAMURA, Tomohiro, Kariya-shi, Aichi 448-8671 (JP); HIROSE, Takayuki, Kariya-shi, Aichi 448-8671 (JP)
(74) Representative: TBK
(86) International application number: PCT/JP2023/028791
(87) International publication number: WO 2024/053312

(57) **Abstract**

A power storage device includes a stack 2 and a sealing body 3. A bipolar electrode 21 includes a current collector 24 having a surface 24a and a surface 24b opposite the surface 24a, a positive electrode active material layer 25 provided on the surface 24a, and a negative electrode active material layer 26 provided on the surface 24b. The sealing body 3 includes a sealing member 4. The current collector 24 has a rectangular shape with at least one side exceeding 1 m when viewed in a stack direction D of the stack 2, and includes a first metal foil 241 including the surface 24a, a second metal foil 242 including the surface 24b and thinner than the first metal foil 241, and an adhesive layer 243 provided between the first metal foil 241 and the second metal foil 242 and adhering the first metal foil 241 and the second metal foil 242. The adhesive layer 243 is thinner than the second metal foil 242.

## Description

### Technical Field

The present disclosure relates to a power storage device.

### Background Art

A power storage device provided with a stack including stacked bipolar electrodes and a sealing body that seals the side surface of the stack is known, wherein each of the bipolar electrodes has a current collector in which two metal foils of different thicknesses are integrated by a conductive resin layer (see, for example, Patent Literature 1).

### Citation List

### Patent Literature

Patent Literature 1: Japanese Unexamined Patent Publication No. 2010-277862

### Summary of Invention

### Technical Problem

In the power storage device described above, a resin sealing member that has a coefficient of linear expansion greater than the metal foils may be bonded to the surface of the current collector. In this case, the metal foils may be repeatedly pulled or compressed by the sealing member due to changes in the temperature during use of the power storage device, and may suffer fatigue damage. In particular, in a current collector having a large area in which at least one side exceeds 1 m, there is a significant difference in the amount of expansion and contraction between the sealing member and the metal foils, and the metal foils tend to suffer fatigue damage.

In the current collector of Patent Literature 1, one of the two metal foils is formed thinner than the other metal foil. Thus, in a case in which the sealing member is bonded to the current collector, the one of the metal foils may particularly suffer fatigue damage.

It is an object of the present disclosure to provide a power storage device that is capable of suppressing fatigue damage of both metal foils in a current collector in which two metal foils of different thicknesses are integrated by a conductive resin layer.

### Solution to Problem

A power storage device of the present disclosure includes a stack including bipolar electrodes being stacked, and a sealing body sealing the stack, wherein each of the bipolar electrodes includes: a current collector having a first main surface and a second main surface opposite the first main surface; a first active material layer provided on the first main surface; and a second active material layer provided on the second main surface, wherein the sealing body includes a sealing member made from resin and bonded to an outer edge portion of at least one of the first main surface and the second main surface, wherein the current collector has a rectangular shape with at least one side exceeding 1 m when viewed in a stack direction of the stack, and includes: a first metal foil including the first main surface; a second metal foil including the second main surface and thinner than the first metal foil; and a conductive adhesive layer provided between the first metal foil and the second metal foil and adhering the first metal foil and the second metal foil, and wherein the conductive adhesive layer is thinner than the second metal foil.

In this power storage device, the current collector includes the conductive adhesive layer provided between the first metal foil and the second metal foil and adhering the first metal foil and the second metal foil. Here, since the second metal foil is thinner than the first metal foil, the second metal foil tends to be damaged. However, the conductive adhesive layer is even thinner than the second metal foil, so that even if the conductive adhesive layer is softer than the first metal foil and the second metal foil, it is possible to reinforce the thin second metal foil by the thick first metal foil. Consequently, fatigue damage of both the metal foils, particularly the second metal foil, can be suppressed.

The conductive adhesive layer may have a thickness of 5 µm or less. In this case, it is even easier to achieve the reinforcement effect between the metal foils, so that the fatigue damage of both the metal foils can be further suppressed.

The conductive adhesive layer may have a thickness of half or less than a thickness of the second metal foil. In this case, it is even easier to achieve the reinforcement effect between the metal foils, so that the fatigue damage of both the metal foils can be further suppressed.

The second metal foil may have a thickness of less than 10 µm. In this case, since the second metal foil is thin, an increase in the size of the current collector can be suppressed. In this way, even if the second metal foil is thin, reinforcement by the first metal foil is possible, so that the fatigue damage of the second metal foil is suppressed.

The conductive adhesive layer may have a Young's modulus greater than a Young's modulus of the sealing member. In this case, the fatigue damage of the metal foils due to expansion and contraction of the sealing member can be suppressed compared to a configuration in which the Young's modulus of the conductive adhesive layer is less than the Young's modulus of the sealing member.

The sealing member may be bonded to the outer edge portion of each of the first main surface and the second main surface. In this case, the tensile and compressive stress that the sealing member applies to the current collector increases compared to a configuration in which the sealing member is bonded to the outer edge portion of either the first surface or the second surface. Consequently, a configuration that enables the reinforcement between the metal foils is especially effective.

### Advantageous Effects of Invention

The present disclosure is capable of providing a power storage device that is capable of suppressing fatigue damage of both metal foils in a current collector in which two metal foils of different thicknesses are integrated by a conductive resin layer.

### Brief Description of Drawings

[FIG. 1] FIG. 1 is a schematic cross-sectional view of a power storage device according to an embodiment.
[FIG. 2] FIG. 2 is a partly enlarged view of FIG. 1.

### Description of Embodiments

Embodiments of the present disclosure will be described in detail below with reference to the drawings. Same reference signs will be given to the same or corresponding parts in the drawings, and redundant description will be omitted.

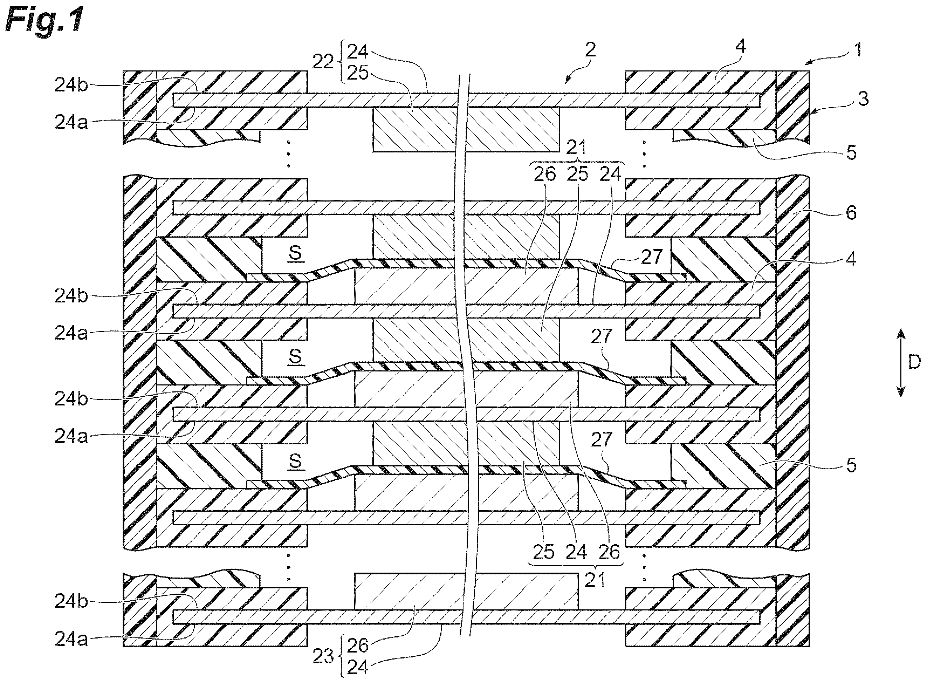

A power storage device 1 illustrated in FIG. 1 is a power storage module used for batteries, for example, for forklifts, hybrid vehicles, and electric vehicles. The power storage device 1 is a secondary battery such as a nickel-hydrogen secondary battery or a lithium-ion secondary battery. In this embodiment, the power storage device 1 is a lithium-ion secondary battery.

As illustrated in FIG. 1, the power storage device 1 includes a stack 2 and a sealing body 3. The stack 2 includes a bipolar electrode 21, a positive terminal electrode 22, and a negative terminal electrode 23 that are stacked in a stack direction D. In this embodiment, the stack 2 includes a plurality of the bipolar electrodes 21. Each of the bipolar electrodes 21 has a current collector 24, a positive electrode active material layer 25, and a negative electrode active material layer 26.

The current collector 24 has a rectangular shape in which at least one side has a length that exceeds 1 m when viewed in the stack direction D. In this embodiment, the current collector 24 has a rectangular shape in which each side has a length that exceeds 1 m when viewed in the stack direction D. For example, the length of the long sides of the current collector 24 is 1.5 m and the length of the short sides is 1.2 m when viewed in the stack direction D. The current collector 24 includes a surface (first surface) 24a, and a surface (second surface) 24b opposite the surface 24a. The positive electrode active material layer 25 is provided on the surface 24a. The positive electrode active material layer 25 has, for example, a rectangular shape when viewed in the stack direction D. The surface 24a includes an uncoated region where the positive electrode active material layer 25 is not provided. The uncoated region surrounds the positive electrode active material layer 25 when viewed in the stack direction D.

The negative electrode active material layer 26 is provided on the surface 24b. The negative electrode active material layer 26 has, for example, a rectangular shape when viewed in the stack direction D. The surface 24b includes an uncoated region where the negative electrode active material layer 26 is not provided. The uncoated region surrounds the negative electrode active material layer 26 when viewed in the stack direction D. The plurality of the bipolar electrodes 21 are stacked such that the positive electrode active material layer 25 of one bipolar electrode 21 faces the negative electrode active material layer 26 of another bipolar electrode 21. That is, the plurality of the bipolar electrodes 21 are stacked such that, among adjacent bipolar electrodes 21, the surface 24a of the current collector 24 of one bipolar electrode 21 faces the surface 24b of the current collector 24 of the other bipolar electrode 21.

The positive terminal electrode 22 is disposed on one side in the stack direction D with respect to the plurality of the bipolar electrodes 21. The positive terminal electrode 22 has the current collector 24 and the positive electrode active material layer 25. The positive terminal electrode 22 is different from the bipolar electrodes 21 in that it does not have the negative electrode active material layer 26. The other configurations of the positive terminal electrode 22 are the same as those of the bipolar electrodes 21. The positive terminal electrode 22 is disposed such that the positive electrode active material layer 25 of the positive terminal electrode 22 faces the negative electrode active material layer 26 of the bipolar electrode 21. That is, the positive terminal electrode 22 is stacked such that the surface 24a of the current collector 24 of the positive terminal electrode 22 faces the surface 24b of the current collector 24 of the bipolar electrode 21 adjacent to the positive terminal electrode 22.

The negative terminal electrode 23 is disposed on the other side in the stack direction D with respect to the plurality of the bipolar electrodes 21. The negative terminal electrode 23 has the current collector 24 and the negative electrode active material layer 26. The negative terminal electrode 23 is different from the bipolar electrodes 21 in that it does not have the positive electrode active material layer 25. The other configurations of the negative terminal electrode 23 are the same as those of the bipolar electrodes 21. The negative terminal electrode 23 is disposed such that the negative electrode active material layer 26 of the negative terminal electrode 23 faces the positive electrode active material layer 25 of the bipolar electrode 21. That is, the negative terminal electrode 23 is stacked such that the surface 24b of the current collector 24 of the negative terminal electrode 23 faces the surface 24a of the current collector 24 of the bipolar electrode 21 adjacent to the negative terminal electrode 23. An inner space S in which an electrolyte solution is accommodated is formed between each of the bipolar electrodes 21, between the bipolar electrode 21 and the positive terminal electrode 22, and between the bipolar electrode 21 and the negative terminal electrode 23.

The stack 2 includes a plurality of separators 27. The separators 27 are disposed between each of the bipolar electrodes 21, between the bipolar electrode 21 and the positive terminal electrode 22, and between the bipolar electrode 21 and the negative terminal electrode 23. The separators 27 are positioned between the positive electrode active material layer 25 and the negative electrode active material layer 26 facing each other. The separators 27 are, for example, sheet-like. The separators 27 have, for example, a rectangular shape when viewed in the stack direction D. An outer edge of each separator 27 is positioned outward of an outer edge of the positive electrode active material layer 25 and an outer edge of the negative electrode active material layer 26 when viewed in the stack direction D. A peripheral portion of the separator 27 is positioned between a sealing member 4 and a spacer 5 described further below. The separator 27 is a member that allows charge carriers such as lithium ions to pass through. The separator 27 separates the electrodes 21, 22, 23 adjacent to each other. This prevents electrical shorting caused by the contact between the electrodes 21, 22, 23.

The current collector 24 is a chemically inactive electrical conductor that keeps current flowing to the positive electrode active material layer 25 and the negative electrode active material layer 26 during the discharging or charging of the power storage device 1. The current collector 24 may, for example, be plate-like, foil-like, sheet-like, or film-like. In a case in which the current collector 24 is foil-like, the current collector 24 may have a thickness in the range of 10 µm or more and 200 µm or less.

The positive electrode active material layer 25 includes a positive electrode active material that is capable of storing and releasing charge carriers such as lithium ion. Examples of the positive electrode active material include complex oxides, metallic lithium, and sulfur. The composition of the complex oxides includes, for example, at least one of iron, manganese, titanium, nickel, cobalt, and aluminum, and lithium. Examples of the complex oxides include olivine type lithium iron phosphate (LiFePO₄), LiCoO₂, and LiNiMnCoO₂.

The negative electrode active material layer 26 includes a negative electrode active material that is capable of storing and releasing charge carriers such as lithium ion. Examples of the negative electrode active material include carbon such as graphite, artificial graphite, highly oriented graphite, mesocarbon microbeads, hard carbon, and soft carbon, a metallic compound, an element capable of alloying with lithium or compounds thereof, and boron-added carbon. Examples of the element capable of alloying with lithium include silicon and tin.

Each of the positive electrode active material layer 25 and the negative electrode active material layer 26 may also include a binding agent and a conductive additive in addition to the active material. The binding agent serves to bind the active materials or the conductive additives to each other to maintain a conductive network in the electrode. Examples of the binding agent include a fluorine-containing resin such as polyvinylidene fluoride, polytetrafluoroethylene, and fluororubber, a thermoplastic resin such as polypropylene and polyethylene, an imide-based resin such as polyimide and polyamide imide, an alkoxysilyl group-containing resin, an acrylic resin such as polyacrylic acid and polymethacrylic acid, styrene-butadiene rubber, carboxymethyl cellulose, alginate such as sodium alginate and ammonium alginate, water-soluble cellulose ester crosslinked body, and starch-acrylic acid graft polymer. These binding agents may be used singly or in plurality. The conductive additive is a conductive material such as acetylene black, carbon black, or graphite, and is capable of increasing electrical conductivity. For example, N-methyl-2-pyrrolidone is used as a viscosity adjusting solvent.

A traditionally publicly known method such as roll coating, die coating, dip coating, doctor blading, spray coating, or curtain coating is used to form the positive electrode active material layer 25 on the surface 24a and to form the negative electrode active material layer 26 on the surface 24b. Specifically, the active material and a solvent, and optionally the binding agent and the conductive additive, are mixed to produce a slurry composition for forming an active material layer, which is applied to the surface 24a or the surface 24b and dried. The solvent is, for example, N-methyl-2-pyrrolidone, methanol, methyl isobutyl ketone, or water. The dried composition may be compressed in order to increase electrode density.

The separator 27 is, for example, a porous sheet or nonwoven fabric that includes a polymer which absorbs and retains an electrolyte. The material of the separator 27 is, for example, polypropylene, polyethylene, polyolefin, or polyester. The separator 27 may have a single layer structure or a multi-layer structure. In the case in which the separator 27 has a multi-layer structure, the separator 27 may include, for example, a base material layer and a pair of adhesive layers, and may be adhered and fixed to the positive electrode active material layer 25 and the negative electrode active material layer 26 by the pair of adhesive layers. The separator 27 may include a ceramic layer to be a heat resistant layer. The separator 27 may be reinforced with a vinylidene fluoride resin compound.

Examples of the electrolyte impregnated in the separator 27 include a liquid electrolyte (electrolyte solution) that includes a nonaqueous solvent and an electrolyte salt dissolved in the nonaqueous solvent, and a polymer gel electrolyte including an electrolyte retained in a polymer matrix. In the case in which the electrolyte is impregnated in the separator 13, publicly known lithium salt such as LiClO₄, LiAsF₆, LiPF₆, LiBF₄, LiCF₃SO₃, LiN(FSO₂)₂, or LiN(CF₃SO₂)₂ can be used as the electrolyte salt thereof. Additionally, publicly known solvents such as cyclic carbonates, cyclic esters, chain carbonates, chain esters, or ethers can be used as the nonaqueous solvent. It should be noted that two or more of these publicly known solvent materials may be combined for use. In this embodiment, the electrolyte impregnated in the separator 27 is an electrolyte solution.

The sealing body 3 is a member that seals the inner space S. The sealing body 3 is provided on the side surface of the stack 2. The sealing body 3 seals the side surface of the stack 2. The sealing body 3 has, for example, a rectangular cylindrical shape. The sealing body 3 has electrical insulation properties. The sealing body 3 has a plurality of the sealing members 4, a plurality of the spacers 5, and a welded portion 6.

Each of the sealing members 4 is provided on the surface of the current collector 24 so as to surround the positive electrode active material layer 25 and the negative electrode active material layer 26 when viewed in the stack direction (direction perpendicular to the surface 24a) D. The sealing member 4 is made from resin. The sealing member 4 is bonded to at least one outer edge portion of the surface 24a and the surface 24b. That is, the sealing member 4 is bonded to at least one of an outer edge portion 24d of the surface 24a and an outer edge portion 24e of the surface 24b. In this embodiment, the sealing member 4 is bonded to the outer edge portions of both the surface 24a and the surface 24b. That is, the sealing member 4 is bonded to both the outer edge portion 24d of the surface 24a and the outer edge portion 24e of the surface 24b.

Each of the spacers 5 is provided between the electrodes 21, 22, 23 adjacent to each other in the stack direction D. The spacer 5 has, for example, a rectangular frame shape. The spacer 5 is made, for example, from resin. The welded portion 6 has, for example, a rectangular cylindrical shape. The welded portion 6 reaches both ends of the stack 2 in the stack direction D. The welded portion 6 is integrally formed.

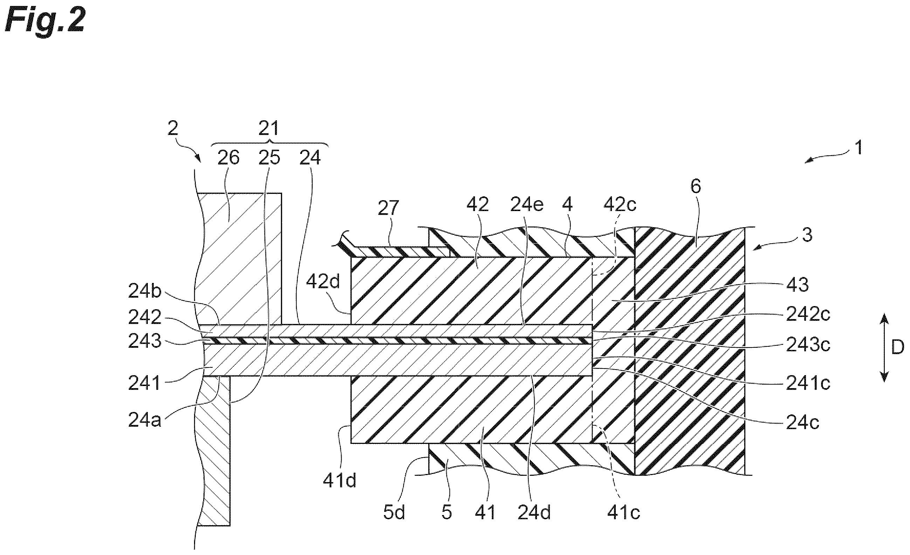

As illustrated in FIG. 2, the current collector 24 includes a first metal foil 241, a second metal foil 242, and an adhesive layer (conductive adhesive layer) 243. The current collector 24 is a laminated foil formed by laminating the first metal foil 241 and the second metal foil 242. The first metal foil 241 includes the surface 24a. The surface 24a of the current collector 24 is the surface of the first metal foil 241 on the side of the positive electrode active material layer 25. The first metal foil 241 has, for example, a rectangular shape when viewed in the stack direction D. The first metal foil 241 includes aluminum and is, for example, an aluminum foil. The first metal foil 241 may, for example, be a nickel foil, a titanium foil, or a stainless steel foil. The first metal foil 241 may be an alloy foil of the metals above. A coating layer may be formed on the surface 24a of the first metal foil 241 by a publicly known method such as plating or spray coating.

The second metal foil 242 is provided on the side of the first metal foil 241 opposite the positive electrode active material layer 25. The second metal foil 242 includes the surface 24b. The surface 24b of the current collector 24 is the surface of the second metal foil 242 on the side of the negative electrode active material layer 26. The second metal foil 242 has, for example, a rectangular shape when viewed in the stack direction D. A side surface (outer edge) 242c of the second metal foil 242 substantially matches a side surface (outer edge) 241c of the first metal foil 241 when viewed in the stack direction D. In this embodiment, the second metal foil 242 includes copper and is, for example, a copper foil. The second metal foil 242 may, for example, be a nickel foil, a titanium foil, or a stainless steel foil. The second metal foil 242 may be an alloy foil of the metals above. A coating layer may be formed on the surface 24b of the second metal foil 242 by a publicly known method such as plating or spray coating.

The adhesive layer 243 is provided between the first metal foil 241 and the second metal foil 242. The adhesive layer 243 has, for example, a rectangular shape when viewed in the stack direction D. A side surface (outer edge) 243c of the adhesive layer 243 substantially matches the side surface 241c of the first metal foil 241 and the side surface 242c of the second metal foil 242 when viewed in the stack direction D. A side surface (outer edge) 24c of the current collector 24 is formed of the side surface 241c, the side surface 242c, and the side surface 243c.

The adhesive layer 243 adheres the first metal foil 241 and the second metal foil 242. The adhesive layer 243 is adhered to the first metal foil 241 and the second metal foil 242. The adhesive layer 243 is a conductive adhesive layer having conductivity. The adhesive layer 243 includes, for example, a conductive resin material. Examples of the conductive resin material include resin in which a conductive filler is added to a conductive polymer material or a non-conductive polymer material.

In this embodiment, the adhesive layer 243 includes an adhesive component and a conductive component. The adhesive component functions as an adhesive that adheres the first metal foil 241 and the second metal foil 242. The adhesive component is, for example, a thermosetting resin or a thermoplastic resin. The resin of the adhesive component is an olefin-based resin such as polypropylene or polyethylene, or an acrylic resin such as polyacrylic acid. In the case in which the adhesive component is a thermosetting resin, the adhesive component may further include a curing agent such as an isocyanate-based curing agent or an epoxy-based curing agent. In the case in which the first metal foil 241 and the second metal foil 242 are bonded by the adhesive layer 243 having an olefin-based resin as the adhesive component, an epoxy-based curing agent that generates less gas during the curing reaction of the adhesive component may be used. The adhesive component may have electrolyte resistance. In this case, even when an electrolyte solution penetrates between the first metal foil 241 and the second metal foil 242 due to the occurrence of pinhole defects, and the like, in one of the first metal foil 241 and the second metal foil 242, the adhesive layer 243 can suppress the electrolyte solution reaching the other of the first metal foil 241 and the second metal foil 242 to prevent shorting. The conductive component is, for example, conductive particles dispersed in the adhesive component. The conductive component electrically connects the first metal foil 241 and the second metal foil 242. The material of the conductive component is, for example, graphite or metal. The conductive particles are, for example, graphite particles or metal particles. The conductive particles may be formed solely from each of the materials above, or may be formed by coating the surface of resin particles, and the like, with the materials above. Spherical particles in which metal coatings are formed on the surfaces of core particles formed from resin, ceramic, or the like, may be used as the conductive particles.

The first metal foil 241 has a thickness (length of the first metal foil 241 in the stack direction D), for example, of 20 µm or more and 150 µm or less. The second metal foil 242 is thinner than the first metal foil 241. The second metal foil 242 has a thickness (length of the second metal foil 242 in the stack direction D), for example, of less than 10 µm. The adhesive layer 243 is thinner than the second metal foil 242. The adhesive layer 243 has a thickness (length of the adhesive layer 243 in the stack direction D), for example, of half or less than the thickness of the first metal foil 241. The thickness of the adhesive layer 243 is, for example, 5 µm or less, and may be 3 µm or less.

It is known that in metal foils typically used for the current collector 24, the strength against fatigue damage of the metal foil increases as the thickness of the metal foil increases. In this embodiment, the thickness of the first metal foil 241 which is an aluminum foil is more than twice the thickness of the second metal foil 242 which is a copper foil, so that the strength against fatigue damage of the first metal foil 241 alone is higher than the strength against fatigue damage of the second metal foil 242 alone. That is, the strength against fatigue damage of the second metal foil 242 alone is lower than the strength against fatigue damage of the first metal foil 241 alone.

The sealing member 4 includes a sealing portion 41, a sealing portion 42, and a sealing portion 43. The sealing portion 41 is provided on the surface 24a. The sealing portion 41 has, for example, a rectangular frame shape when viewed in the stack direction D. The sealing portion 41 surrounds the positive electrode active material layer 25 and the negative electrode active material layer 26 when viewed in the stack direction D. An outer edge 41c of the sealing portion 41 substantially matches the side surface 24c of the current collector 24 when viewed in the stack direction D. An inner edge 41d of the sealing portion 41 is separated from the positive electrode active material layer 25. The sealing portion 41 is bonded to the outer edge portion 24d of the surface 24a.

The sealing portion 42 is provided on the surface 24b. The sealing portion 42 has, for example, a rectangular frame shape when viewed in the stack direction D. The sealing portion 42 surrounds the positive electrode active material layer 25 and the negative electrode active material layer 26 when viewed in the stack direction D. An outer edge 42c of the sealing portion 42 substantially matches the side surface 24c of the current collector 24 when viewed in the stack direction D. An inner edge 42d of the sealing portion 42 is separated from the negative electrode active material layer 26. The sealing portion 42 is bonded to the outer edge portion 24e of the surface 24b. The inner edge 42d of the sealing portion 42 substantially matches the inner edge 41d of the sealing portion 41 when viewed in the stack direction D. The sealing portion 42 has a thickness (length of the sealing portion 42 in the stack direction D) that is, for example, substantially the same as a thickness of the sealing portion 41 (length of the sealing portion 41 in the stack direction D), and is 80 µm or more and 160 µm or less. The thickness of each of the sealing portion 41 and the sealing portion 42 is greater than the thickness of the first metal foil 241 and greater than the thickness of the second metal foil 242.

The sealing portion 43 is provided on the side surface 24c of the current collector 24. The sealing portion 43 is positioned outward of the side surface 24c of the current collector 24, the outer edge 41c of the sealing portion 41, and the outer edge 42c of the sealing portion 42. The sealing portion 43 is connected to the sealing portion 41 and the sealing portion 42. The sealing portion 43 covers the side surface 24c of the current collector 24. The sealing portion 43 covers the side surface 241c of the first metal foil 241, the side surface 242c of the second metal foil 242, and the side surface 243c of the adhesive layer 243.

The sealing portion 43 is bonded to the side surface 24c of the current collector 24. The sealing portion 43 is bonded to the side surface 241c of the first metal foil 241, the side surface 242c of the second metal foil 242, and the side surface 243c of the adhesive layer 243. The sealing portion 43 seals the side surface 24c of the current collector 24. Each of the sealing portion 41, the sealing portion 42, and the sealing portion 43 is a part of the region of the sealing member 4, which is integrally formed from the same material.

The spacer 5 is provided between the sealing members 4 adjacent to each other in the stack direction D. The spacer 5 has, for example, a rectangular frame shape. An inner edge 5d of the spacer 5 is separated more from the positive electrode active material layer 25 or the negative electrode active material layer 26 than the inner edge 41d of the sealing portion 41 and the inner edge 42d of the sealing portion 42 when viewed in the stack direction D. That is, the inner edge 41d of the sealing portion 41 is positioned between the positive electrode active material layer 25 and the inner edge 5d of the spacer 5, and the inner edge 42d of the sealing portion 42 is positioned between the negative electrode active material layer 26 and the inner edge 5d of the spacer 5 when viewed in the stack direction D. The spacer 5 is a different member from the sealing member 4.

The spacer 5 is disposed between a pair of the sealing members 4 adjacent to each other in the stack direction D. The spacer 5 is in contact with the sealing members 4. The spacer 5 forms the inner space S for accommodating an electrolyte solution together with a pair of the bipolar electrodes 21 adjacent to each other in the stack direction D and a pair of the sealing members 4 adjacent to each other in the stack direction D. It should be noted that a liquid injection port for injecting the electrolyte solution into the inner space S is formed in the spacer 5.

The spacer 5 has a thickness (length of the spacer 5 in the stack direction D) greater than the thickness of each of the sealing portion 41 and the sealing portion 42. The thickness of the spacer 5 is, for example, two times or more the thickness of the sealing portion 41 or the thickness of the sealing portion 42. The thickness of the spacer 5 is less than a thickness of the sealing member 4 (length of the sealing member 4 in the stack direction D). That is, the thickness of the spacer 5 is less than the total of the thicknesses of the first metal foil 241, the second metal foil 242, the adhesive layer 243, the sealing portion 41, and the sealing portion 42.

The spacer 5 is welded to the sealing member 4 outward of the side surface 24c of the current collector 24 (i.e., at the welded portion 6). Specifically, the welded portion 6 is formed by outer edge portions of the sealing member 4 and the spacer 5 being melted and resolidified. That is, the welded portion 6 is formed by the outer edge portions of the sealing member 4 and the spacer 5 being welded to each other.

Here, the outer edge portions of the sealing member 4 and the spacer 5 refer to the outer edge portions of the sealing member 4 and the spacer 5 before the welding. The outer edge portion of the sealing member 4 is the portion of the sealing member 4 before the welding that is positioned on a side of the sealing portion 43 opposite the current collector 24. The outer edge portion of the spacer 5 is the portion of the spacer 5 before the welding that overlaps the outer edge portion of the sealing member 4 when viewed in the stack direction D. The welded portion 6 does not reach the side surface 24c of the current collector 24. The welded portion 6 is separated from the side surface 24c of the current collector 24. It should be noted that a liquid injection port that communicates with the liquid injection port of the spacer 5 is formed in the welded portion 6. The welded portion 6 may be formed so as to reach the side surface 24c of the current collector 24. In this case, the sealing portion 43 of the sealing member 4 after the welding is not formed.

Each of the sealing member 4 and the spacer 5 includes a thermoplastic resin. The material of each of the sealing member 4 and the spacer 5 is, for example, acid-modified polyethylene (acid-modified PE), acid-modified polypropylene (acid-modified PP), polyethylene, or polypropylene. Each of the sealing member 4 and the spacer 5 has electrolyte resistance. The materials of the sealing member 4 and the spacer 5 may be the same or different. In this embodiment, the material of the sealing member 4 is, for example, acid-modified polyethylene or acid-modified polypropylene. In this embodiment, the material of the spacer 5 is, for example, polyethylene or polypropylene. The sealing portion 41, the sealing portion 42, and the spacer 5 may be formed of a plurality of resin layers. In this case, different materials may be used for each of the resin layers.

Acid-modified polyethylene and acid-modified polypropylene are easy to bond with metal compared to non-acid-modified polyethylene and non-acid-modified polypropylene. Since the materials of the first metal foil 241 and the second metal foil 242 of the current collector 24 are both metal, forming the sealing portions 41, 42, 43 from acid-modified polyethylene or acid-modified polypropylene makes it possible to improve the bond strength of the sealing portions 41, 42, 43 to the first metal foil 241 or the second metal foil 242.

The adhesive layer 243 has a Young's modulus greater than a Young's modulus of the sealing member 4. The Young's modulus of the adhesive layer 243 is greater than a Young's modulus of each of the sealing portion 41 and the sealing portion 42. In this embodiment, the sealing member 4 is integrally formed from the same material, so that the sealing portion 41 and the sealing portion 42 have the same Young's modulus.

The Young's modulus of the adhesive layer 243 is less than that of the first metal foil 241 and the second metal foil 242. As an example, the Young's modulus of the first metal foil 241 and the second metal foil is about 100 times or more of the Young's modulus of the adhesive layer 243. The sealing member 4 (sealing portions 41, 42) has a coefficient of linear expansion greater than a coefficient of linear expansion of the first metal foil 241 and the second metal foil 242. As an example, the coefficient of linear expansion of the sealing portions 41, 42 is about 5 times or more of the coefficient of linear expansion of the first metal foil 241 and the second metal foil 242.

The adhesive layer 243 has a heat resistance temperature (hereinafter, may be referred to simply as "heat resistance temperature") higher than a melting point of each of the sealing portion 41, the sealing portion 42, the sealing portion 43, and the spacer 5. Specifically, the heat resistance temperature of the adhesive component of the adhesive layer 243 is higher than the melting point of each of the sealing portion 41, the sealing portion 42, the sealing portion 43, and the spacer 5. The melting of point of each of the sealing portion 41, the sealing portion 42, the sealing portion 43, and the spacer 5 is, for example, lower than 150 degrees. The heat resistance temperature of the adhesive layer 243 is, for example, 150 degrees or more.

The heat resistance temperature of the adhesive layer 243 is the limit temperature at which a good adhesion between the first metal foil 241 and the second metal foil 242 is maintained. Specifically, the heat resistance temperature of the adhesive layer 243 is the limit temperature at which the adhesive strength between the first metal foil 241 and the second metal foil 242 due to the adhesive layer 243 is at a predetermined threshold or more. The predetermined threshold may, for example, be 1% of the adhesive strength of the adhesive layer 243 at room temperature. Generally, when the temperature of the adhesive layer 243 increases due to heating, the adhesive strength of the adhesive layer 243 tends to decrease compared to before heating. When the temperature of the adhesive layer 243 rises above the heat resistance temperature, the adhesive strength of the adhesive layer 243 decreases to a value lower than the predetermined threshold above. When the adhesive strength of the adhesive layer 243 falls below the predetermined threshold above, the good adhesion between the first metal foil 241 and the second metal foil 242 cannot be maintained, which may result in damage to the current collector 24. In this embodiment, the heat resistance temperature of the adhesive layer 243 is higher than the melting point of each of the sealing portion 41, the sealing portion 42, the sealing portion 43, and the spacer 5, so that even if the temperature of the adhesive layer 243 reaches the melting point of the sealing portion 41, the sealing portion 42, the sealing portion 43, or the spacer 5 during the welding of the sealing portion 41, the sealing portion 42, the sealing portion 43, or the spacer 5, the current collector 24 tends not to be damaged. Examples of the damage to the current collector 24 include peeling of the first metal foil 241 or the second metal foil 242, changes in the relative position between the first metal foil 241 and the second metal foil 242 (positional misalignment between the first metal foil 241 and the second metal foil 242), and deformation (e.g., creases) of the first metal foil 241 or the second metal foil 242.

In this embodiment, the adhesive strength of the adhesive layer 243 heated to the heat resistance temperature (hereinafter, "high temperature strength") is 1% or more of the adhesive strength of the adhesive layer 243 at room temperature (hereinafter, "room temperature strength"). As long as the adhesive strength of the heated adhesive layer 243 is 1% or more of the room temperature strength, the good adhesion between the first metal foil 241 and the second metal foil 242 due to the adhesive layer 243 is maintained. When the temperature of the adhesive layer 243 is at the heat resistance temperature or lower, the adhesive strength of the adhesive layer 243 is 1% or more of the room temperature strength, and the good adhesion between the first metal foil 241 and the second metal foil 242 is maintained. In this embodiment, the heat resistance temperature of the adhesive layer 243 is higher than the melting point of each of the sealing portion 41, the sealing portion 42, the sealing portion 43, and the spacer 5, so that even if the temperature of the adhesive layer 243 reaches the melting point of the sealing portion 41, the sealing portion 42, the sealing portion 43, or the spacer 5 during the welding of the sealing portion 41, the sealing portion 42, the sealing portion 43, or the spacer 5, the adhesive strength of the adhesive layer 243 will be 1% or more of the room temperature strength. That is, even if the temperature of the adhesive layer 243 reaches the melting point of the sealing portion 41, the sealing portion 42, the sealing portion 43, or the spacer 5, the good adhesion between the first metal foil 241 and the second metal foil 242 due to the adhesive layer 243 will be maintained, so that the current collector 24 tends not to be damaged.

The room temperature strength is measured, for example, as shown below. That is, first, the current collector 24 (the current collector 24 without the positive electrode active material layer 25, the negative electrode active material layer 26, and the sealing member 4) is prepared. Then, at room temperature, the peel strength at which the first metal foil 241 peels from the second metal foil 242 is measured as the room temperature strength, for example, by a 180-degree peel strength test (in accordance with JIS Z 0237:2009 as an example). The high temperature strength is measured, for example, as shown below. That is, first, the current collector 24 is prepared, similarly to when measuring the room temperature strength. The current collector 24 is then heated to the heat resistance temperature. Subsequently, the peel strength at which the first metal foil 241 peels from the second metal foil 242 is measured as the high temperature strength, similarly to when measuring the room temperature strength, while maintaining the temperature of the current collector 24 heated to the heat resistance temperature.

The current collector 24 is formed by adhering the first metal foil 241 and the second metal foil 242 by the adhesive layer 243, for example, by a dry lamination method. In the dry lamination method, an adhesive solution is first applied to the first metal foil 241. Next, the adhesive solution is dried to form a uniform adhesive on the surface of the first metal foil 241. The second metal foil 242 is then laminated, by thermocompression bonding, on the first metal foil 241 on which the adhesive is formed. The thermocompression bonding is performed at a constant pressure using a pair of heated rollers. One of the heated rollers is a movable roller. By moving the movable roller, the space between the pair of heated rollers is adjusted, so that the pressure during the thermocompression bonding can be adjusted. As a result of the lamination, the current collector 24 in which the first metal foil 241 and the second metal foil 242 are adhered by the adhesive layer 243 is obtained.

The first metal foil 241 and the second metal foil 242 have large thickness tolerances. When measuring the thickness of the adhesive layer 243 by measuring the thickness of the current collector 24 after the first metal foil 241 and the second metal foil 242 have been laminated, the thickness tolerances of the first metal foil 241 and the second metal foil 242 significantly affect the measurement results of the thickness of the current collector 24, making it difficult to accurately measure the thickness of the adhesive layer 243. Thus, the thickness of the adhesive layer 243 is managed by measuring the thickness of the adhesive formed on the surface of the first metal foil 241 before the lamination. For example, it is determined whether the thickness of the adhesive falls within the numerical range for good products, and if it does not, the corresponding portion is removed from the line before the lamination, or cut away after the lamination. It should be noted that, before the lamination, the thickness of only the adhesive can be measured since the adhesive is not covered by the second metal foil 242. Here, during the thermocompression bonding of the first metal foil 241 and the second metal foil 242, the adhesive (the adhesive layer 243) that is sufficiently softer than the first metal foil 241 and the second metal foil 242 is mainly compressed. Consequently, when performing the thermocompression bonding of the first metal foil 241 and the second metal foil 242 at a constant pressure, it is possible to appropriately manage the thickness of the adhesive layer 243 after the lamination based on the thickness of the adhesive applied to the first metal foil 241 by examining, in advance, the correlation of the thickness of the adhesive layer 243 after the thermocompression bonding with respect to the thickness of the adhesive before the lamination when a predetermined pressure is applied.

As described above, in the power storage device 1, the sealing member 4, which has a coefficient of linear expansion greater than that of the first metal foil 241 and the second metal foil 242 of the current collector 24, is bonded to the current collector 24. Thus, the sealing member 4 expands and contracts more significantly than the first metal foil 241 and the second metal foil 242 due to the repeated changes in the temperature during the use of the power storage device 1, and repeatedly applies tensile and compressive stress on the first metal foil 241 and the second metal foil 242. The current collector 24 has the adhesive layer 243 that is provided between the first metal foil 241 and the second metal foil 242, and adheres the first metal foil 241 and the second metal foil 242. Here, as described above, the second metal foil 242 is thinner than the first metal foil 241 and tends to suffer fatigue damage. However, the adhesive layer 243 is even thinner than the second metal foil 242. Thus, even if the Young's modulus of the adhesive layer 243 is less than the Young's modulus of the first metal foil 241 and the second metal foil 242, and the adhesive layer 243 is softer than the first metal foil 241 and the second metal foil 242, the tensile and compressive stress of the sealing member 4 on the first metal foil 241 and the second metal foil 242 tends not to be absorbed by the adhesive layer 243. Consequently, an effect in which the first metal foil 241 and the second metal foil 242 reinforce each other's strength is achieved. Specifically, it is possible to reinforce the thin second metal foil 242 by the thick first metal foil 241. This suppresses the fatigue damage of both the first metal foil 241 and the second metal foil 242, particularly, of the second metal foil 242. Since there is no need to ensure that the first metal foil 241 and the second metal foil 242 have the strength to withstand the repeated tensile and compressive stress by the sealing member 4, an increase in the size of the current collector 24 can be suppressed. As a result of suppression of the increase in the size of the current collector 24, the power storage device 1 can be made small.

The results of performing a thermal shock test (in accordance with JIS C 60068-2-14:2011) on a plurality of test pieces simulating the power storage device according to an experimental example will be described. Each test piece was formed by providing one current collector 24 with the sealing member 4. The length of the long sides of the current collector 24 was 1.5 m and the length of the short sides was 1.2 m. Each current collector 24 was formed using an aluminum foil (JIS A3003) as the first metal foil 241, a copper foil (electrolytic copper foil) as the second metal foil 242, and an olefin-based resin as the adhesive layer 243. Acid-modified polyethylene was used as the material of the sealing member 4, and the thickness of the portions corresponding to the sealing portion 41 and the sealing portion 42 was set to 120 µm. The plurality of test pieces were formed by the current collectors 24, with the thickness of the copper foil fixed at 7.8 µm and the thickness of the olefin-based resin fixed at 3 µm, while varying the thickness of the aluminum foil to 40 µm, 45 µm, and 50 µm. The plurality of test pieces were formed under the same condition except for the thickness of the aluminum foil.

Table 1 shows the results of the thermal shock test. In Table 1, the number of cycles until the copper foil breaks is shown as a ratio, with the thickness of the aluminum foil set to 40 µm, 45 µm, and 50 µm, using the case where the thickness of the aluminum foil is 40 µm as the reference (1x). The number of cycles until the copper foil breaks is the number of thermal shocks (thermal cycles) until the copper foil reaches the point of breaking. The copper foil fractures earlier than the aluminum foil. As shown in Table 1, the number of cycles until the copper foil breaks increases as the thickness of the aluminum foil increases. As a result, it has been confirmed that a reinforcing effect of the copper foil by the aluminum foil can be achieved.

**[Table 1]**

| Thickness of aluminum foil | 40 µm | 45 µm | 50 µm |
|---|---|---|---|
| Number of cycles until copper foil breaks | 1x | 1.3x | 1.6x |

Since the thickness of the second metal foil 242 is less than 10 µm, the increase in the size of the current collector 24 can be further suppressed. In this way, even if the second metal foil 242 is thin, the second metal foil 242 can be reinforced by the first metal foil 241, so that the fatigue damage of the second metal foil 242 is suppressed.

The thickness of the adhesive layer 243 is half or less than the thickness of the second metal foil 242. This makes it even easier to achieve the reinforcing effect between the first metal foil 241 and the second metal foil 242. Consequently, the fatigue damage of the second metal foil 242 can be further suppressed.

The Young's modulus of the adhesive layer 243 is greater than the Young's modulus of the sealing member 4. Thus, since the adhesive layer 243 is harder than the sealing member 4, deformation of the current collector 24 due to the expansion and contraction of the sealing member 4 is suppressed compared to a configuration in which the Young's modulus of the adhesive layer 243 is less than the Young's modulus of the sealing member 4, and the adhesive layer 243 is softer than the sealing member 4. Consequently, the fatigue damage of the first metal foil 241 and the second metal foil 242 can be suppressed.

The sealing member 4 includes the sealing portion 41 bonded to the outer edge portion 24d of the surface 24a of the current collector 24, and the sealing portion 42 bonded to the outer edge portion 24e of the surface 24b. This increases the tensile and compressive stress that the sealing member 4 applies to the current collector 24 compared to a configuration in which the sealing member 4 includes either the sealing portion 41 or the sealing portion 42. Consequently, the configuration of the power storage device 1 that enables the reinforcement between the first metal foil 241 and the second metal foil 242 is especially effective.

The present disclosure is not limited to the embodiments described above.

In the embodiments, examples have been shown in which the current collectors 24 of the bipolar electrodes 21, the positive terminal electrode 22, and the negative terminal electrode 23 are the same. However, the current collectors 24 of the positive terminal electrode 22 and the negative terminal electrode 23 may be different from the current collectors 24 of the bipolar electrodes 21 in terms of material and thickness. The current collectors 24 of the positive terminal electrode 22 and the negative terminal electrode 23 may, for example, be a current collector formed from a single metal foil and not a current collector formed from a laminated foil.

In the embodiments, examples have been shown in which the sealing member 4 includes the sealing portion 41, the sealing portion 42, and the sealing portion 43. However, it is only required that the sealing member 4 includes at least the sealing portion 41 or the sealing portion 42. That is, it is only required that the sealing member 4 is bonded to at least the outer edge portion 24d of the surface 24a or the outer edge portion 24e of the surface 24b of the current collector 24.

In the embodiments, examples have been shown in which the peripheral portion of the separator 27 is positioned between the sealing member 4 and the spacer 5. However, the peripheral portion of the separator 27 need not reach the spacer 5. The peripheral portion of the separator 27 may be welded to the sealing member 4.

In the embodiments, the first metal foil 241 and the second metal foil 242 are adhered directly to the adhesive layer 243, but they may be adhered to the adhesive layer 243 via a carbon coating layer (not shown). That is, the current collector 24 may further include a carbon coating layer provided between the first metal foil 241 and the adhesive layer 243 and between the second metal foil 242 and the adhesive layer 243. The carbon coating layer has conductivity. The carbon coating layer includes, for example, a binder and graphite. The carbon coating layer may be provided between the first metal foil 241 and the adhesive layer 243 or between the second metal foil 242 and the adhesive layer 243. That is, it is only required that the carbon coating layer is provided between at least one of the first metal foil 241 and the adhesive layer 243, or the second metal foil 242 and the adhesive layer 243. According to such configuration, for example, compared to a case in which the first metal foil 241 or the second metal foil 242 is adhered directly to the adhesive layer 243, the binder resin included in the carbon coating layer is more strongly adhered by the adhesive layer 243, so that the adhesive strength between the first metal foil 241 and the adhesive layer 243 or the adhesive strength between the second metal foil 242 and the adhesive layer 243 can be more reliably ensured. Additionally, for example, even if pinholes are formed in the first metal foil 241, the second metal foil 242, or the adhesive layer 243, short circuits through the liquid between the adjacent inner spaces S can be suppressed by the carbon coating layer. It should be noted that the carbon coating layer may further be provided on the surface 24a or the surface 24b of the current collector 24. In this case, the carbon coating layer is also disposed between the surface 24a and the sealing portion 41 or between the surface 24b and the sealing portion 42.

The inner edge 5d of the spacer 5 may be disposed closer to the positive electrode active material layer 25 or the negative electrode active material layer 26 than the inner edge 41d of the sealing portion 41 and the inner edge 42d of the sealing portion 42 when viewed in the stack direction D. That is, the inner edge 5d of the spacer 5 may be positioned between the positive electrode active material layer 25 and the inner edge 41d of the sealing portion 41 or between the negative electrode active material layer 26 and the inner edge 42d of the sealing portion 42 when viewed in the stack direction D.

### Reference Signs List

1...Power storage device, 2...Stack, 3...Sealing body, 4... Sealing member, 21.. Bipolar electrode, 24...Current collector, 24a Surface (first main surface), 24b...Surface (second main surface), 24d...Outer edge portion, 24e...Outer edge portion, 25...Positive electrode active material layer (first active material layer), 26...Negative electrode active material layer (second active material layer), 241...First metal foil, 242...Second metal foil, 243...Adhesive layer (conductive adhesive layer).

## Claims

1. A power storage device comprising:
a stack including bipolar electrodes being stacked; and
a sealing body sealing the stack,
wherein each of the bipolar electrodes includes:
a current collector having a first main surface and a second main surface opposite the first main surface;
a first active material layer provided on the first main surface; and
a second active material layer provided on the second main surface,
wherein the sealing body includes a sealing member made from resin and bonded to an outer edge portion of at least one of the first main surface and the second main surface,
wherein the current collector has a rectangular shape with at least one side exceeding 1 m when viewed in a stack direction of the stack, and includes:
a first metal foil including the first main surface;
a second metal foil including the second main surface and thinner than the first metal foil; and
a conductive adhesive layer provided between the first metal foil and the second metal foil and adhering the first metal foil and the second metal foil, and
wherein the conductive adhesive layer is thinner than the second metal foil.

2. The power storage device according to claim 1, wherein the conductive adhesive layer has a thickness of 5 µm or less.

3. The power storage device according to claim 1 or 2, wherein the conductive adhesive layer has a thickness of half or less than a thickness of the second metal foil.

4. The power storage device according to any one of claims 1 to 3, wherein the second metal foil has a thickness of less than 10 µm.

5. The power storage device according to any one of claims 1 to 4, wherein the conductive adhesive layer has a Young's modulus greater than a Young's modulus of the sealing member.

6. The power storage device according to any one of claims 1 to 5, wherein the sealing member is bonded to the outer edge portion of each of the first main surface and the second main surface.
